# EUROPEAN PATENT APPLICATION

(11) **EP 4 728 916 A1**
(43) Date of publication of application: **22.04.2026**
(21) Application number: 25209433.9
(22) Date of filing: 17.10.2025
(51) Int. Cl.: A41D 19/00, B32B 25/14

(54) **LAMINATE AND GLOVE**

(30) Priority: 17.10.2024 JP 2024181902
(71) Applicant: Showa Glove Co., Hyogo 670-0802 (JP)
(72) Inventor: MARUI, Daiki, Hyogo, 670-0802 (JP)
(74) Representative: dompatent

(57) **Abstract**

An object of the present disclosure is to provide a laminate that can eliminate electrification while enabling a reduction in the amount of an electrically conductive material used.

An aspect of the present disclosure is a laminate including a plurality of layers, wherein the plurality of layers are divided into: a first surface region including one surface of the laminate; a second surface region including another surface of the laminate; and an intermediate region sandwiched between the first surface region and the second surface region, and a volume resistance of the first surface region and a volume resistance of the second surface region are each smaller than a volume resistance of the intermediate region.

## Description

### BACKGROUND OF THE INVENTION

### Field of the Invention

The present disclosure relates to a laminate and a glove.

### Background Art

It is known that a working glove that has a volume resistance of less than 10⁸ Ω and thus can eliminate electrification is useful for reducing risks of work in a combustible or explosive atmosphere and/or inhibiting electrostatic breakdown of an electronic device as an object for gripping.

Such a working glove can be obtained by imparting electrical conductivity (see, for example, Japanese Unexamined Patent Application (Translation of PCT Application), Publication No. 2022-536038), and includes: for example, a textile substrate incorporating an electrically conductive yarn; and an outer layer containing an electrically conductive material such as carbon black or carbon fiber. In other words, the electrical conductivity of the entirety including the textile substrate and the outer layer is enhanced.

### Prior Art Documents

### Patent Documents

[Patent Document 1] Japanese Unexamined Patent Application (Translation of PCT Application), Publication No. 2022-536038

### SUMMARY OF THE INVENTION

For the outer layer of the glove, it is common to blend the electrically conductive material throughout the entire outer layer, and increase the blend amount of the electrically conductive material until the outer layer becomes less than a desired volume resistance. As a result, adverse effects such as a higher likelihood of an increase in the manufacturing cost of the glove; occurrence of defective products due to processability becoming unstable, in other words, an increase in the amount of waste and an increase in environmental load; and a higher likelihood of a manufactured glove becoming hard are likely to occur.

The present disclosure was made in view of the foregoing circumstances, and an object of the disclosure is to provide a laminate and a glove that can eliminate electrification while enabling a reduction in the amount of an electrically conductive material used.

An aspect of the present disclosure is a laminate including a plurality of layers, wherein the plurality of layers are divided into: a first surface region including one surface of the laminate; a second surface region including another surface of the laminate; and an intermediate region sandwiched between the first surface region and the second surface region, and a volume resistance of the first surface region and a volume resistance of the second surface region are each smaller than a volume resistance of the intermediate region.

Another aspect of the present disclosure is a glove including the laminate of the present disclosure.

### Effects of the Invention

The laminate and the glove of the present disclosure can eliminate electrification while enabling a reduction in the amount of an electrically conductive material used.

### BRIEF DESCRIPTION OF THE DRAWING

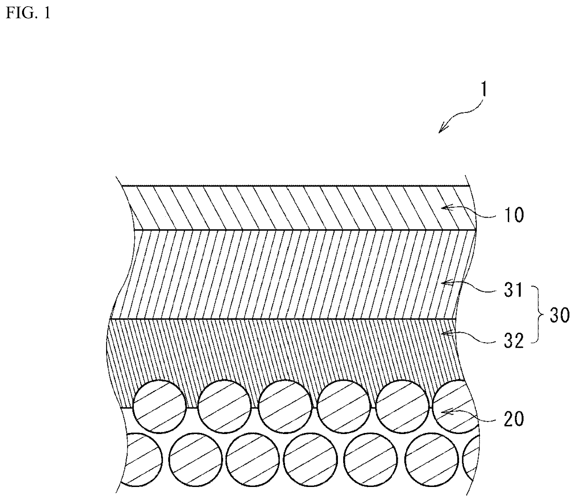

FIG. 1 is a schematic cross-sectional view illustrating a laminate according to an embodiment of the present disclosure.

### DESCRIPTION OF EMBODIMENTS

### Description of Embodiments of the Present Disclosure

First, embodiments of the present disclosure will be described.

Although it has been thought that in order to eliminate electrification, an entire laminate needs to be made of an electrically conductive material, the present inventors have discovered that by lowering the volume resistance of each of the front and back surface regions of the laminate, electrification can be eliminated even though the volume resistance of the intermediate region sandwiched between both the surface regions is large.

In other words, (1) an aspect of the present disclosure is a laminate including a plurality of layers, wherein the plurality of layers are divided into: a first surface region including one surface of the laminate; a second surface region including another surface of the laminate; and an intermediate region sandwiched between the first surface region and the second surface region, and a volume resistance of the first surface region and a volume resistance of the second surface region are each smaller than a volume resistance of the intermediate region.

Because a region with a small volume resistance is limited to the first surface region and the second surface region, the laminate enables reducing the amount of an electrically conductive material used. Thus, the manufacturing cost is reduced, poor blend dispersion originating from the electrically conductive material is reduced, and the processability is stabilized, and therefore, the defective rate can be also reduced. Furthermore, the laminate as a whole can eliminate electrification even though the volume resistance of the intermediate region sandwiched between both the surface regions is large.
(2) In the laminate according to (1), the intermediate region preferably includes a plurality of layers that are parallel to the first surface region and the second surface region. Due to the intermediate region including the plurality of layers in this manner, the characteristics of the laminate are easily adjusted.
(3) In the laminate according to (1) or (2), a main component of each of the first surface region and the intermediate region is preferably a thermosetting elastomer. Because the laminate as a whole enables reducing the amount of the electrically conductive material used, blend stability in the laminate whose main component is the thermosetting elastomer is enhanced.
(4) In the laminate according to any one of (1) to (3), the first surface region and the second surface region preferably each contain an electrically conductive material. Due to the first surface region and the second surface region each containing the electrically conductive material in this manner, the volume resistance can be easily controlled.
(5) In the laminate according to any one of (1) to (3), it is preferred that the second surface region includes a fiber layer, and the fiber layer contains fiber having electrical conductivity. Due to the second surface region including the fiber layer containing the fiber having electrical conductivity in this way, the processability of the laminate can be enhanced.
(6) The laminate according to any one of (1) to (5) preferably has a volume resistance of less than 10⁸ Ω. Due to the volume resistance of the laminate being less than the upper limit in this manner, electrification elimination performance can be enhanced.
(7) In the laminate according to any one of (1) to (6), it is preferred that the volume resistance of the intermediate region is no less than 10⁸ Ω, and the volume resistance of each of the first surface region and the second surface region is less than 10⁷ Ω. Due to the volume resistance of the intermediate region being no less than the lower limit, and the volume resistance of each of the first surface region and the second surface region being less than the upper limit in this manner, electrification can be eliminated while a reduction in the amount of the electrically conductive material used is enabled.
(8) In the laminate according to any one of (1) to (7), a surface resistance of each of the first surface region and the second surface region is preferably less than 10⁷ Ω. Due to the surface resistance of each of the first surface region and the second surface region being less than the upper limit in this manner, electrification is easily eliminated.
(9) Another aspect of the present disclosure is a glove including the laminate according to any one of (1) to (7).

Because the glove includes the laminate of the present disclosure, the glove is less likely to become electrified, and enables reducing the amount of the electrically conductive material used.

As referred to herein, the "volume resistance" of the laminate is a resistance value in a thickness direction measured in accordance with the EN standard EN 61340-2-3: 2016 8. Furthermore, the "surface resistance" as referred to herein is a resistance value measured in accordance with the EN standard EN 61340-2-3: 2016 8.

### Details of Embodiments of the Present Disclosure

Hereafter, the laminate and the glove according to each embodiment of the present disclosure is described with reference to the drawing as appropriate.

### Laminate

A laminate 1 illustrated in FIG. 1 includes a plurality of layers, wherein the plurality of layers are divided into: a first surface region 10 including one surface of the laminate 1; a second surface region 20 including another surface of the laminate 1; and an intermediate region 30 sandwiched between the first surface region 10 and the second surface region 20. The laminate 1, which is divided into the first surface region 10, the second surface region 20, and the intermediate region 30, has at least three layers.

### First Surface Region

A main component of the first surface region 10 is preferably a thermosetting elastomer. Because the laminate 1 as a whole enables reducing the amount of an electrically conductive material used, it is possible to enhance blend stability in the layer in which the amount of the electrically conductive material used is reduced in the laminate 1 whose main component is the thermosetting elastomer. As the thermosetting elastomer, a natural rubber (NR), an acrylonitrile butadiene rubber (NBR), a chloroprene rubber (CR), or the like can be used.

The first surface region 10 preferably contains an electrically conductive material to impart electrical conductivity to the first surface region 10. Due to the first surface region 10 containing the electrically conductive material in this manner, the volume resistance can be easily controlled. The electrically conductive material can be exemplified by electrically conductive carbon materials, metal fibers, carbon fibers, metal powders, metal oxides, electrically conductive polymers, and the like. Of these, the electrically conductive carbon materials, which allow easy control of the volume resistance, are preferred. Of the electrically conductive carbon materials, carbon black is more preferred.

The lower limit of an average thickness of the first surface region 10 is preferably 0.05 mm, and more preferably 0.08 mm. On the other hand, the upper limit of the average thickness of the first surface region 10 is not particularly limited, and is preferably 0.50 mm, and more preferably 0.25 mm. When the average thickness of the first surface region 10 is less than the lower limit, in a case in which, for example, a slight scratch occurs on the first surface region 10 due to an external factor such as wear, the intermediate region 30 is exposed, and the volume resistance of the laminate 1 may easily increase. Conversely, when the average thickness of the first surface region 10 is more than the upper limit, the amount of the electrically conductive material used may be too large. It is to be noted that the "average thickness" as referred to herein can be determined by observing a cross section of the laminate or a test piece cut out from the laminate at 100-fold magnification, and calculating an arithmetic mean of values measured at 10 points at 500 µm intervals.

The volume resistance of the first surface region 10 is preferably less than 10⁷ Ω, more preferably less than 10⁶ Ω, and still more preferably less than 10⁵ Ω. When the volume resistance of the first surface region 10 is less than the upper limit in this manner, electrification is easily eliminated. The lower limit of the volume resistance of the first surface region 10 is not particularly limited, and is preferably no less than 10² Ω in light of reducing the amount of the electrically conductive material used. It is to be noted that the volume resistance of a single layer is based on a measurement result of a layer formed as a single layer.

The first surface region 10 has a surface resistance of preferably less than 10⁷ Ω, more preferably less than 10⁶ Ω, and still more preferably less than 10⁵ Ω. When the surface resistance of the first surface region 10 is less than the upper limit in this manner, electrification is easily eliminated. The lower limit of the surface resistance of the first surface region 10 is not particularly limited, and is preferably no less than 10² Ω in light of reducing the amount of the electrically conductive material used. It is to be noted that the surface resistance of a single layer is based on a measurement result of a layer formed as a single layer.

### Second Surface Region

The second surface region 20 may contain an electrically conductive material similarly to the first surface region 10, but as illustrated in FIG. 1, it is preferred that the second surface region 20 includes a fiber layer, and the fiber layer contains fiber having electrical conductivity. Due to the second surface region 20 including the fiber layer containing the fiber having electrical conductivity in this manner, the processability of the laminate 1 can be enhanced. Specifically, because a coagulant or an additive (such as a water-repellent agent or an oil-repellent agent) can be used in advance for the fiber, it is easy to adjust the coagulability of the intermediate region 30 to be laminated to the second surface region 20. This makes it easier to control the thickness of the intermediate region 30 and penetration of the intermediate region 30 into the second surface region 20. The degree of the penetration may be used to adjust the flexibility and the abrasion resistance of the laminate 1. The second surface region 20 may also be, for example, a knitted product containing electrically non-conductive fiber such as natural fiber, semi-synthetic fiber, synthetic fiber, or inorganic fiber, and fiber having electrical conductivity such as electrically conductive fiber or metal fiber.

In a case in which the second surface region 20 contains the electrically conductive material similarly to the first surface region 10, the average thickness of the second surface region 20 may be no less than 0.05 mm. The upper limit is not particularly limited, and the average thickness of the second surface region 20 may be, for example, no more than 1.5 mm. In a case in which the second surface region 20 contains the fiber having electrical conductivity, the average thickness of the second surface region 20 may be no less than 0.15 mm and no more than 2.5 mm.

Regardless of whether the second surface region 20 has either one of the configurations, a volume resistance and a surface resistance of the second surface region 20 can be set to fall within ranges similar to those of the volume resistance and the surface resistance of the first surface region 10, respectively.

### Intermediate Region

The intermediate region 30 may include only one layer (single layer), but may include a plurality of layers parallel to the first surface region 10 and the second surface region 20, as illustrated in FIG. 1 (in the example in FIG. 1, two layers: a first intermediate layer 31 and a second intermediate layer 32). When the intermediate region 30 includes a plurality of layers in this manner, the characteristics of the laminate 1 are easily adjusted. Specifically, the thickness of the intermediate layer 30 is easily adjusted. Increasing the thickness of the intermediate layer 30 can enhance chemical resistance and also can improve film physical properties such as abrasion resistance, tearing strength, and puncture resistance. On the other hand, decreasing the thickness of the intermediate layer 30 can ensure flexibility. Furthermore, workability becomes easily ensured in a case in which the laminate 1 is used for a glove. It is to be noted that in a case in which the intermediate region 30 includes a plurality of layers, the number of the layers is preferably two or three. When the number of the layers is too large, the thickness of the intermediate region 30 may become large, and the volume resistance may increase too much.

A main component of the intermediate region 30 is preferably a thermosetting elastomer. Because the laminate 1 as a whole enables reducing the amount of the electrically conductive material used, blend stability is enhanced in the laminate 1 that contains the thermosetting elastomer as a main component. As the thermosetting elastomer, those exemplified for the first surface region 10 can be used.

The lower limit of an average thickness of the intermediate region 30 (the total average thickness in a case of including a plurality of layers) is preferably 0.05 mm, and more preferably 0.2 mm. On the other hand, the upper limit of the average thickness of the intermediate region 30 is not particularly limited, and is preferably 1.5 mm, and more preferably 1.0 mm. When the average thickness of the intermediate region 30 is less than the lower limit, the effect of reducing the amount of the electrically conductive material used may be insufficient. Conversely, when the average thickness of the intermediate region 30 is more than the upper limit, the volume resistance of the laminate 1 as a whole may not be sufficiently reduced, and flexibility may decrease due to the increased thickness of the laminate 1 as a whole. It is to be noted that in a case in which the intermediate region 30 includes a plurality of layers, the layers are preferably laminated so that the layers as a whole have an average thickness that falls within the range, but the average thickness of each layer does not need to be the same.

In light of maintaining the abrasion resistance of a film, the volume resistance of the intermediate region 30 may be no less than 10⁸ Ω, or may be no less than 10⁹ Ω. Alternatively, in light of enhancing blend stability, the volume resistance of the intermediate region 30 is preferably no less than 10⁸ Ω, and more preferably no less than 10⁹ Ω. When the volume resistance of the intermediate region 30 is no less than the lower limit, the laminate 1 can eliminate electrification while enabling a reduction in the amount of the electrically conductive material used. On the other hand, the volume resistance of the intermediate region 30 is preferably less than 10¹³ Ω, and more preferably less than 10¹⁰ Ω. When the volume resistance of the intermediate region 30 is no less than the upper limit, the electrification elimination performance of the laminate 1 may be insufficient.

In a case in which the intermediate region 30 includes a plurality of layers, each layer preferably falls within the range of the volume resistance. In a case in which the intermediate region 30 includes a plurality of layers, the volume resistance ratio between adjacent layers (the first intermediate layer 31 and the second intermediate layer 32 in FIG. 1) is preferably no less than 1 and no more than 10,000, more preferably no less than 1 and no more than 100, still more preferably no less than 1 and no more than 10, and particularly preferably no less than 1 and no more than 2. It is to be noted that the "volume resistance ratio" as referred to herein means the proportion of the volume resistance of the intermediate layer having a larger volume resistance to that of the intermediate layer having a smaller volume resistance.

### Relationship of Volume Resistance

The volume resistance of the laminate 1 as a whole is preferably less than 10⁸ Ω, and more preferably less than 10⁷ Ω. When the volume resistance of the laminate 1 is less than the upper limit in this manner, the electrification elimination performance can be enhanced. Furthermore, because a glove satisfying the European Standard EN 16350 (standard for the explosion-proof property of a glove) and including, for example, the laminate 1 always slowly discharges static electricity that has electrified the glove, a large amount of discharge does not occur at once, and the glove can be used in an explosive atmosphere such as an ATEX zone. It is to be noted that the lower limit of the volume resistance of the laminate 1 as a whole is not particularly limited, and, in light of, e.g., preventing electric shock when the laminate 1 is used in a glove, the lower limit is preferably no less than 10³ Ω, and more preferably no less than 10⁴ Ω.

In the laminate 1, the volume resistance of the first surface region 10 and the volume resistance of the second surface region 20 are each smaller than the volume resistance of the intermediate region 30.

The volume resistance ratio of the volume resistance of the intermediate region 30 to the volume resistance of the first surface region 10 is preferably no less than 5, more preferably no less than 10, and still more preferably no less than 100. When the volume resistance ratio is no less than the lower limit, it is easy to eliminate electrification while enabling a reduction in the amount of the electrically conductive material used. The upper limit of the volume resistance ratio is not particularly limited, and may be set to 1,000,000, for example.

The volume resistance ratio of the volume resistance of the intermediate region 30 to the volume resistance of the second surface region 20 may be similarly set.

When the intermediate region 30 includes a plurality of layers as in FIG. 1, the volume resistance ratio between the first surface region 10 and the layer of the intermediate region 30 adjacent to the first surface region 10 (the first intermediate layer 31 in FIG. 1) (the volume resistance ratio of the volume resistance of the first intermediate layer 31 to the volume resistance of the first surface region 10) is preferably no less than 5, more preferably no less than 10, and still more preferably no less than 100. The upper limit of the volume resistance ratio is not particularly limited, and may be set to 1,000,000, for example.

The volume resistance ratio between the second surface region 20 and the layer of the intermediate region 30 adjacent to the second surface region 20 (the second intermediate layer 32 in FIG. 1) is also similarly set.

### Advantages

Because a region with a small volume resistance is limited to the first surface region 10 and the second surface region 20, the laminate 1 enables reducing the amount of the electrically conductive material used. Thus, the manufacturing cost is reduced, poor blend dispersion originating from the electrically conductive material is reduced, and the processability is stabilized, and therefore, the defective rate can be also reduced. The reduction in the defective rate leads to a reduction in the amount of waste due to defectives, and thus can reduce environmental load. Furthermore, the laminate 1 as a whole can eliminate electrification even though the volume resistance of the intermediate region 30 sandwiched between both the surface regions is large.

### Glove

Another aspect of the present disclosure is a glove including the laminate 1 described above. The glove may include only the laminate 1, or a part of the glove may include the laminate 1.

In a case in which the second surface region 20 of the laminate 1 contains a thermosetting elastomer as a main component and the electrically conductive material, the second surface region 20 may be a part or an entirety of a main body portion formed into a bag shape to cover a palm and a dorsal side of a wearer's hand. In this case, the glove is a so-called unsupporting glove, and the first surface region 10 and the intermediate region 30 coat the main body portion.

In a case in which the second surface region 20 of the laminate 1 contains the fiber having electrical conductivity, the second surface region 20 may be a part or an entirety of a glove main body knitted with a yarn made of a fiber. In this case, the glove is a so-called supporting glove, and the first surface region 10 and the intermediate region 30 coat the glove main body.

### Advantages

Because the glove includes the laminate 1 of the present disclosure, the glove is less likely to become electrified, and enables reducing the amount of the electrically conductive material used. Furthermore, because the glove enables reducing the addition amount of the electrically conductive material, the glove enables easily maintaining physical properties such as chemical resistance and abrasion resistance.

### Method for Manufacturing Laminate

The laminate 1 can be manufactured by fabricating the second surface region 20, and then laminating the intermediate region 30 and the first surface region 10 in this order. It is to be noted that in a case in which the intermediate region 30 includes a plurality of layers, the layers are laminated in order from the layer on the side close to the second surface region 20. Hereinafter, a case in which the glove including the laminate 1 is manufactured will be described as an example.

### In a case of Unsupporting Glove

In an unsupporting glove, the second surface region 20 of the laminate 1 contains, for example, the thermosetting elastomer as a main component and the electrically conductive material. In this case, the laminate 1 can be fabricated by the following procedure.

### Fabrication of Second Surface Region

First, a ceramic three-dimensional hand mold is prepared and dipped in a coagulant (a coagulant dip step). In this coagulant dip step, a coagulant solution containing a coagulant for coagulating a blended solution used in each dip step described later is applied to the three-dimensional hand mold.

As the coagulant solution, for example, an aqueous solution containing a polyvalent metal salt or a methanol solution containing a polyvalent metal salt can be used. The polyvalent metal salt is exemplified by barium chloride, calcium chloride, magnesium chloride, zinc chloride, aluminum chloride, barium nitrate, calcium nitrate, zinc nitrate, barium acetate, calcium acetate, zinc acetate, calcium sulfate, magnesium sulfate, aluminum sulfate, and the like. These polyvalent metal salts may be used alone, or a plurality thereof may be used in combination.

After the three-dimensional hand mold is dipped in the coagulant and pulled up, the coagulant is dried (a coagulant drying step).

Next, the three-dimensional hand mold after the coagulant dip step is dipped in a thermosetting-elastomer latex blended solution (a first blended solution dip step). This forms the second surface region 20 on a surface of the three-dimensional hand mold.

The thermosetting-elastomer latex blended solution is prepared so that the second surface region 20 will have a desired constitution after coagulation.

After the three-dimensional hand mold is dipped in the thermosetting-elastomer latex blended solution and pulled up, another coagulant dip step, a leaching step, and a drying step may be optionally provided in this order.

In the another coagulant dip step, the three-dimensional hand mold after the first blended solution dip step is dipped again in a coagulant. As the coagulant, the same coagulant as that used in the above-described coagulant dip step may be used.

The leaching step is a step in which the three-dimensional hand mold is dipped in water to remove an excess coagulant.

In the drying step, the blended solution and the leaching water are dried.

### Fabrication of Intermediate Region

First, the surface of the three-dimensional hand mold with the second surface region 20 formed thereon is dipped in a thermosetting-elastomer latex blended solution (a second blended solution dip step). This laminates the intermediate region 30 to the surface of the three-dimensional hand mold.

The thermosetting-elastomer latex blended solution is prepared so that the intermediate region 30 will have a desired constitution after coagulation.

After the three-dimensional hand mold is dipped in the thermosetting-elastomer latex blended solution and pulled up, another coagulant dip step, a leaching step, and a drying step may be optionally provided in this order. These steps are similar to the corresponding steps in the fabrication of the second surface region 20.

It is to be noted that in a case in which the intermediate region 30 includes a plurality of layers, a similar step is repeated for each layer.

### Fabrication of First Surface Region

First, the surface of the three-dimensional hand mold with the intermediate region 30 formed thereon is dipped in a thermosetting-elastomer latex blended solution (a third blended solution dip step). This laminates the first surface region 10 to the surface of the three-dimensional hand mold.

The thermosetting-elastomer latex blended solution is prepared so that the first surface region 10 will have a desired constitution after coagulation.

After the three-dimensional hand mold is dipped in the thermosetting-elastomer latex blended solution and pulled up, another coagulant dip step, a leaching step, and a drying step may be optionally provided in this order. These steps are similar to the corresponding steps in the fabrication of the second surface region 20.

### Post Steps

As post steps, a curing step and a cooling step are finally carried out. Specifically, in the curing step, heating and drying are carried out. In the cooling step, the laminate 1 (glove) having a lowered temperature after the curing step is released from the three-dimensional hand mold.

As described above, the laminate 1 can be obtained.

### In a case of Supporting Glove

In a supporting glove, the second surface region 20 of the laminate 1 contains the fiber having electrical conductivity. For example, the second surface region 20 is a glove main body knitted with a yarn made of the fiber. In this case, the laminate 1 can be fabricated by the following procedure.

### Fabrication of Second Surface Region

For the supporting glove, first, the glove main body is put on a ceramic three-dimensional hand mold. The three-dimensional hand mold with the glove main body put thereon is dipped in a coagulant (a coagulant dip step). This step is similar to the coagulant dip step for the unsupporting glove, except that the glove main body is put on. Furthermore, a coagulant drying step is carried out similarly to the case of the unsupporting glove.

### Fabrication of Intermediate Region and First Surface Region

The intermediate region 30 and the first surface region 10 can be laminated by a similar procedure as the procedure for the unsupporting glove. It is to be noted that similarly to the case of the unsupporting glove, after each region is laminated, the another coagulant dip step and the leaching step may be carried out. Alternatively, the another coagulant dip step and the leaching step may be carried out only after the first surface region 10 is laminated.

### Post Steps

As post steps, a curing step and a cooling step are carried out by a similar procedure as the procedure for the unsupporting glove.

As described above, the laminate 1 can be obtained.

### Other Embodiments

The present invention is not limited to the above embodiment and may be carried out in various modified and improved modes in addition to the aforementioned modes.

In the above embodiment, the first surface region and the second surface region each include only a single layer, but one or both of the first surface region and the second surface region may include a plurality of layers.

Of the first surface region and the second surface region, in the surface region including a plurality of layers, each layer preferably has a volume resistance falling within the above-described range suitable for the first surface region or the second surface region. Furthermore, the volume resistance ratio between the adjacent layers, with the layer having a smaller volume resistance used as the standard, is preferably no less than 1 and no more than 100, more preferably no less than 1 and no more than 10, and still more preferably no less than 1 and no more than 2.

In addition, the volume resistance ratio of the intermediate region to a layer of the plurality of layers that is adjacent to the intermediate region (in a case in which the intermediate region includes a plurality of layers, an intermediate layer adjacent to the layer adjacent to the intermediate region) is preferably no less than 5, may be no less than 10, or may be no less than 100. The upper limit of the volume resistance ratio is not particularly limited, and may be set to 1,000,000, for example.

In light of imparting anti-slipping performance to the glove, anti-slipping particles may be included in the thermosetting-elastomer latex blended solution used for the first surface region. Instead of the anti-slipping particles, air may be included in the blended solution, and the blended solution may be laminated to form a foam layer.

### EXAMPLES

Hereafter, the present invention is described further in detail by way of Examples; however, the invention is not limited to the Examples below.

In the Examples, the phrase "parts by mass" of each raw material means parts by mass as a solid content. It is to be noted that for ammonia water, the phrase "parts by mass" means the parts by mass of an effective component (i.e., ammonia) in the ammonia water, and for methanol, the phrase "parts by mass" means the parts by mass of an effective component (i.e., methanol) in an aqueous methanol solution.

### Thermosetting-Elastomer Latex Blended Solution and Knitted Glove

A total of eight types of following thermosetting-elastomer latex blended solutions and glove main bodies (knitted gloves) were prepared.

### (1) Thermosetting-Elastomer NBR Latex Blended Solution Not Containing Electrically Conductive Material

"X6338", which is a NBR latex, manufactured by Synthomer, was prepared. With respect to 100 parts by mass of the NBR latex, 0.1 parts by mass of sodium dodecylbenzene sulfonate, 0.4 parts by mass of ammonia water, 0.4 parts by mass of potassium hydroxide, 0.5 parts by mass of sulfur, 1 part by mass of zinc oxide, 0.2 parts by mass of zinc diethyldithiocarbamate, 0.5 parts by mass of 4-methyl-6-tert-butylphenol, and an appropriate amount of a thickener ("A-7075", manufactured by Toagosei Company, Limited) were mixed together to prepare a blended solution. The NBR latex blended solution was adjusted with water so that the total solid content concentration contained in the NBR latex blended solution became 38% by mass (the concentration of the NBR latex became 36% by mass), and thus, a blended solution in which the 36% by mass NBR latex was mixed with the water was obtained. The viscosity of the 36% by mass NBR latex blended solution was 1,500 mPa·s, as measured using a Brookfield viscometer under the condition of V6 (a rotational speed of 6 rpm, a temperature of 25 °C).

### (2) Thermosetting-Elastomer NR Latex Blended Solution Not Containing Electrically Conductive Material

"MA Latex Concentrate", which is a NR latex, manufactured by MARDEC SAIGON RUBBER Co., Ltd. was prepared. With respect to 100 parts by mass of the NR latex, 0.1 parts by mass of sodium dodecylbenzene sulfonate, 0.4 parts by mass of ammonia water, 0.4 parts by mass of potassium hydroxide, 1.0 part by mass of sulfur, 1.0 part by mass of zinc oxide, 0.2 parts by mass of zinc diethyldithiocarbamate, 0.5 parts by mass of 4-methyl-6-tert-butylphenol, and an appropriate amount of a thickener ("A-7075", manufactured by Toagosei Company, Limited) were mixed together to prepare a blended solution. The NR latex blended solution was adjusted with water so that the total solid content concentration contained in the NR latex blended solution became 50% by mass (the concentration of the NR latex became 48% by mass), and thus, a blended solution in which the 48% by mass NR latex was mixed with the water was obtained. The viscosity of the 48% by mass NR latex blended solution was 2,500 mPa·s, as measured using a Brookfield viscometer under the condition of V6 (a rotational speed of 6 rpm, a temperature of 25 °C).

### (3) Thermosetting-Elastomer NBR Latex Blended Solution 1 Containing Electrically Conductive Material

To (1), 3.0 parts by mass of "W311N", manufactured by LION SPECIALTY CHEMICALS CO., LTD., which is an aqueous dispersion containing electrically conductive carbon, was additionally used as an electrically conductive material, and 0.4 parts by mass of "METOLOSE SM400", manufactured by Shin-Etsu Chemical Co., Ltd., which is methyl cellulose, was additionally used as a water-soluble polymer. An obtained NBR latex blended solution was adjusted with water so that the total solid content concentration contained in the NBR latex blended solution became 38% by mass (the concentration of the NBR latex became 35% by mass), and thus, a blended solution in which the 35% by mass NBR latex was mixed with the water was obtained. The viscosity of the 35% by mass NBR latex blended solution was 1,500 mPa·s, as measured using a Brookfield viscometer under the condition of V6 (a rotational speed of 6 rpm, a temperature of 25 °C).

### (4) Thermosetting-Elastomer NBR Latex Blended Solution 2 Containing Electrically Conductive Material

To (1), 25.0 parts by mass of "DENTALL WK-200B", manufactured by Otsuka Chemical Co., Ltd., which is an electrically conductive filler containing potassium titanate fiber whose surface is coated with a transparent electrically conductive layer, was additionally used as an electrically conductive material. An obtained NBR latex blended solution was adjusted with water so that the total solid content concentration contained in the NBR latex blended solution became 43% by mass (the concentration of the NBR latex became 32% by mass), and thus, a blended solution in which the 32% by mass NBR latex was mixed with the water was obtained. The viscosity of the 32% by mass NBR latex blended solution was 1,500 mPa·s, as measured using a Brookfield viscometer under the condition of V6 (a rotational speed of 6 rpm, a temperature of 25 °C).

### (5) Thermosetting-Elastomer NR Latex Blended Solution Containing Electrically Conductive Material

To (2), 2.2 parts by mass of "W311N", manufactured by LION SPECIALTY CHEMICALS CO., LTD., which is an aqueous dispersion containing electrically conductive carbon, was additionally used as an electrically conductive material, and 0.4 parts by mass of "METOLOSE SM400", manufactured by Shin-Etsu Chemical Co., Ltd., which is methyl cellulose, was additionally used as a water-soluble polymer. An obtained NR latex blended solution was adjusted with water so that the total solid content concentration contained in the NR latex blended solution became 50% by mass (the concentration of the NR latex became 47% by mass), and thus, a blended solution in which the 47% by mass NR latex was mixed with the water was obtained. The viscosity of the 47% by mass NR latex blended solution was 2,500 mPa·s, as measured using a Brookfield viscometer under the condition of V6 (a rotational speed of 6 rpm, a temperature of 25 °C).

### (6) Knitted Glove Not Containing Electrically Conductive Material

A Knitted glove main body was knitted with a woolly-polyester 500-dtex (3 two-fold yarns each having 83 dtex) filament yarn using "N-SFG 13G", manufactured by SHIMA SEIKI MFG., LTD.

### (7) Knitted Glove 1 Containing Electrically Conductive Material

Woolly polyester of 500 dtex (3 two-fold yarns each having 83 dtex) and woolly nylon of 312 dtex (2 two-fold yarns each having 78 dtex) were used as a core yarn, an electrically conductive yarn of 22 dtex ("Clacarbo", manufactured by Kuraray Co., Ltd.) was used as a sheath yarn to prepare an electrically conductive composite yarn by performing covering at 200 times/m. A knitted glove main body was knitted using "N-SFG 13G", manufactured by SHIMA SEIKI MFG., LTD., in such a manner that 1 course of the electrically conductive composite yarn was knitted for every 10 courses of knitting of the woolly polyester.

### (8) Knitted Glove 2 Containing Electrically Conductive Material

Woolly nylon of 312 dtex (2 two-fold yarns of 78 dtex-24f) was used as a core yarn. An electrically conductive composite yarn including the woolly nylon around which carbon composite organic fiber of 22 dtex-3f ("9R1", manufactured by KB Seiren, Ltd.) was wound at 300 T/M was knitted into a knitted glove main body using "N-SFG 13G", manufactured by SHIMA SEIKI MFG., LTD.

### No. 1

A ceramic three-dimensional hand mold was prepared and dipped in a coagulant. As the coagulant, a coagulant obtained by adding 20 parts by mass of calcium nitrate tetrahydrate to 100 parts by mass of methanol was used. The temperature of the three-dimensional hand mold before the dip was 70 °C, and the liquid temperature of the coagulant was room temperature (25 °C). Furthermore, the dip length was 350 mm, and the three-dimensional hand mold was dipped at a speed of 40 mm/sec. After reaching the predetermined dip length, the three-dimensional hand mold was pulled up at a speed of 40 mm/sec (the dip speed is similar below, and thus, the description is omitted). Then, drying was carried out at 80 °C for 1 minute.

The three-dimensional hand mold was dipped in the blended solution of (3). It is to be noted that the dip length was 340 mm. Thereafter, the three-dimensional hand mold was dipped again in the coagulant, leaching was carried out, and then drying was carried out at 80 °C for 10 minutes. In this way, the second surface region was formed.

Next, the three-dimensional hand mold was dipped in the blended solution of (1). It is to be noted that the dip length was 330 mm. Thereafter, the three-dimensional hand mold was dipped again in the coagulant, leaching was carried out, and then drying was carried out at 80 °C for 10 minutes. In this way, the intermediate region was laminated.

Next, the three-dimensional hand mold was dipped in the blended solution of (3). It is to be noted that the dip length was 320 mm. Thereafter, the three-dimensional hand mold was dipped again in the coagulant, leaching was carried out, and then drying was carried out at 80 °C for 30 minutes. In this way, the first surface region was laminated.

Finally, curing was carried out at 120 °C for 30 minutes, and a laminate No. 1 thus fabricated was released from the three-dimensional hand mold.

### Nos. 2 and 3

Laminates Nos. 2 and 3 were obtained similarly to No. 1, except that the blended solutions for respective regions were changed to the blended solutions shown in Table 1.

### No. 4

A ceramic three-dimensional hand mold with the knitted glove of (8) put thereon was dipped in a coagulant. As the coagulant, a coagulant obtained by adding 3 parts by mass of calcium nitrate tetrahydrate to 100 parts by mass of methanol was used. The temperature of the three-dimensional hand mold before the dip was 70 °C, and the liquid temperature of the coagulant was room temperature (25 °C). Furthermore, the dip length was set to within a range in which the entire glove could be dipped (the dip range is similar below, and thus, the description is omitted). The three-dimensional hand mold was dipped at a speed of 40 mm/sec. After reaching the predetermined dip length, the three-dimensional hand mold was pulled up at a speed of 40 mm/sec. Thereafter, drying was carried out at room temperature for 10 seconds. For No. 4, this knitted glove served as the second surface region.

The three-dimensional hand mold was dipped in the blended solution of (2) at a speed of 20 mm/sec. After reaching the predetermined dip length, the three-dimensional hand mold was kept dipped for 30 seconds and then pulled up at a speed of 20 mm/sec. Then, drying was carried out at 80 °C for 1 hour. In this way, the intermediate region was laminated.

Next, the three-dimensional hand mold was dipped in the blended solution of (3) at a speed of 10 mm/sec. After reaching the predetermined dip length, the three-dimensional hand mold was pulled up at a speed of 10 mm/sec.

Then, the three-dimensional hand mold was dipped in a coagulant. As the coagulant, a coagulant obtained by adding 20 parts by mass of calcium nitrate tetrahydrate to 100 parts by mass of methanol was used. Furthermore, the three-dimensional hand mold was dipped at a speed of 40 mm/sec. After reaching the predetermined dip length, the three-dimensional hand mold was pulled up at a speed of 40 mm/sec. After leaching was carried out, drying was carried out at 80 °C for 30 minutes. In this manner, the first surface region was laminated.

Finally, curing was carried out at 120 °C for 30 minutes, and a laminate No. 4 thus fabricated was released from the three-dimensional hand mold.

### No. 5

A ceramic three-dimensional hand mold with the knitted glove of (7) put thereon was dipped in a coagulant. As the coagulant, a coagulant obtained by adding 3 parts by mass of calcium nitrate tetrahydrate to 100 parts by mass of methanol was used. The temperature of the three-dimensional hand mold before the dip was 70 °C, and the liquid temperature of the coagulant was room temperature (25 °C). Furthermore, the dip length was set to within a range in which the entire glove could be dipped (the dip range is similar below, and thus, the description is omitted). The three-dimensional hand mold was dipped at a speed of 40 mm/sec. After reaching the predetermined dip length, the three-dimensional hand mold was pulled up at a speed of 40 mm/sec. Thereafter, drying was carried out at room temperature for 10 seconds. For No. 5, this knitted glove served as the second surface region.

The three-dimensional hand mold was dipped in the blended solution of (1) at a speed of 20 mm/sec. After reaching the predetermined dip length, the three-dimensional hand mold was kept dipped for 30 seconds and then pulled up at a speed of 20 mm/sec. Then, drying was carried out at 80 °C for 1 hour. In this manner, the second intermediate layer of the intermediate region was laminated.

Next, the three-dimensional hand mold was dipped in the blended solution of (1) at a speed of 20 mm/sec. After reaching the predetermined dip length, the three-dimensional hand mold was pulled up at a speed of 20 mm/sec. Thereafter, drying was carried out at 80 °C for 30 minutes. In this manner, the first intermediate layer of the intermediate region was laminated.

Next, the three-dimensional hand mold was dipped in the blended solution of (3) at a speed of 10 mm/sec. After reaching the predetermined dip length, the three-dimensional hand mold was pulled up at a speed of 10 mm/sec.

Thereafter, the three-dimensional hand mold was dipped in a coagulant. As the coagulant, a coagulant obtained by adding 20 parts by mass of calcium nitrate tetrahydrate to 100 parts by mass of methanol was used. Furthermore, the three-dimensional hand mold was dipped at a speed of 40 mm/sec. After reaching the predetermined dip length, the three-dimensional hand mold was pulled up at a speed of 40 mm/sec. After leaching was carried out, drying was carried out at 80 °C for 30 minutes. In this manner, the first surface region was laminated.

Finally, curing was carried out at 120 °C for 30 minutes, and a laminate No. 5 thus fabricated was released from the three-dimensional hand mold.

### No. 6

Similarly to No. 5, a knitted glove was fabricated as a second layer which was a lower layer of the second surface region, and then a three-dimensional hand mold with the knitted glove was dipped in the blended solution of (3) at a speed of 20 mm/sec. After reaching the predetermined dip length, the three-dimensional hand mold was kept dipped for 30 seconds, and then the three-dimensional hand mold was pulled up at a speed of 20 mm/sec. Then, drying was carried out at 80 °C for 1 hour. In this manner, a first layer of the second surface region was laminated. In other words, for No. 6, the second surface region had a two-layer structure.

In addition, the intermediate region was laminated under similar conditions as those for the first intermediate layer of the intermediate region of No. 5, and the first surface region was laminated under similar conditions as those for the first surface region of No. 5.

Finally, curing was carried out at 120 °C for 30 minutes, and a laminate No. 6 thus fabricated was released from the three-dimensional hand mold.

### No. 7

The second surface region was formed similarly to No. 1. Furthermore, the second intermediate layer was laminated similarly to the intermediate region of No. 1.

Next, the three-dimensional hand mold was dipped in the blended solution of (1). It is to be noted that the dip length was 320 mm. Thereafter, the three-dimensional hand mold was dipped again in the coagulant, leaching was carried out, and then drying was carried out at 80 °C for 30 minutes. In this manner, the first intermediate layer was laminated.

Finally, curing was carried out at 120 °C for 30 minutes, and a laminate No. 7 thus fabricated was released from the three-dimensional hand mold.

### No. 8

A ceramic three-dimensional hand mold with the knitted glove of (7) put thereon was dipped in a coagulant. As the coagulant, a coagulant obtained by adding 3 parts by mass of calcium nitrate tetrahydrate to 100 parts by mass of methanol was used. The temperature of the three-dimensional hand mold before the dip was 70 °C, and the liquid temperature of the coagulant was room temperature (25 °C). Furthermore, the dip length was set to within a range in which the entire glove could be dipped (the dip range is similar below, and thus, the description is omitted). The three-dimensional hand mold was dipped at a speed of 40 mm/sec. After reaching the predetermined dip length, the three-dimensional hand mold was pulled up at a speed of 40 mm/sec. Thereafter, drying was carried out at room temperature for 10 seconds. For No. 5, this knitted glove served as the second surface region.

The three-dimensional hand mold was dipped in the blended solution of (1) at a speed of 20 mm/sec. After reaching the predetermined dip length, the three-dimensional hand mold was kept dipped for 30 seconds and then pulled up at a speed of 20 mm/sec. Then, drying was carried out at 80 °C for 1 hour. In this manner, the second intermediate layer of the intermediate region was laminated.

Next, the three-dimensional hand mold was dipped in the blended solution of (1) at a speed of 20 mm/sec. After reaching the predetermined dip length, the three-dimensional hand mold was pulled up at a speed of 20 mm/sec. Thereafter, drying was carried out at 80 °C for 30 minutes. In this manner, the first intermediate layer of the intermediate region was laminated.

Finally, curing was carried out at 120 °C for 30 minutes, and a laminate No. 8 thus fabricated was released from the three-dimensional hand mold.

### No. 9

A laminate No. 9 was obtained similarly to No. 8, except that the blended solutions for respective regions were changed to the blended solutions shown in Table 1.

### Measurements

For each of the laminates No. 1 to No. 9, the overall volume resistance, and the volume resistance and the average thickness of each region or each layer were measured. The results are shown in Table 1. It is to be noted that each measurement was carried out as follows.

### Overall Volume Resistance

The overall volume resistance was measured in accordance with the EN standard EN 61340-2-3: 2016 8. Specifically, the laminate fabricated was connected in accordance with the measurement procedure for a volume resistance in the above standard using concentric circle ring electrodes with "PRS-812", a resistance measurement apparatus, manufactured by Prostat Corporation, and a displayed resistance value (Ω) was read.

### Volume Resistance and Surface Resistance of Each Region or Each Layer

The volume resistance of each region or each layer was measured in such a manner that each region or each layer was fabricated as a single layer, and the volume resistance of the single layer was measured by a procedure similar to the above-described procedure for the overall volume resistance. It is to be noted that the single layer was fabricated by the following procedure. Furthermore, for the first surface region and the second surface region, each region or each layer was fabricated as a single layer, and the surface resistance of the single layer was measured in accordance with the EN standard EN 61340-2-3: 2016 8.

A ceramic three-dimensional hand mold was prepared and dipped in a coagulant. As the coagulant, a coagulant obtained by adding 20 parts by mass of calcium nitrate tetrahydrate to 100 parts by mass of methanol was used. The temperature of the three-dimensional hand mold before the dip was 70 °C, and the liquid temperature of the coagulant was room temperature (25 °C). Furthermore, the dip length was 350 mm, and the three-dimensional hand mold was dipped at a speed of 40 mm/sec. After reaching the predetermined dip length, the three-dimensional hand mold was pulled up at a speed of 40 mm/sec (the dip speed is similar below, and thus, the description is omitted). Then, drying was carried out at 80 °C for 1 minute.

Next, the three-dimensional hand mold was dipped in blended solutions corresponding to respective regions or respective layers. It is to be noted that the dip length was 330 mm. Thereafter, the three-dimensional hand mold was dipped again in the coagulant, leaching was carried out, and then drying was carried out at 80 °C for 30 minutes.

Finally, curing was carried out at 120 °C for 30 minutes, and an intended single layer thus fabricated was released from the three-dimensional hand mold.

### Average Thickness

The average thickness was determined by observing a cross section of the laminate at 100-fold magnification using a digital microscope (model: VHX-8000, manufactured by KEYENCE CORPORATION), and calculating an arithmetic mean of values measured at 10 points at 500 µm intervals.

**Table 1**

| | | Second surface region | | Intermediate region | | First surface region | Overall volume resistance [Ω] in thickness direction |
|---|---|---|---|---|---|---|---|
| | | second layer | first layer | second intermediate layer | first intermediate layer | | |
| No. 1 | blend | (3) | | (1) | | (3) | 3 layers 2.8×10⁶ |
| | volume resistance [Ω] of single layer | 1.4×10⁶ | | 1.9×10⁸ | | 1.4×10⁶ | |
| | surface resistance [Ω] of single layer | 6.4×10⁶ | | - | | 6.4×10⁶ | |
| | average thickness [mm] | 0.15 | | 0.15 | | 0.12 | |
| No. 2 | blend | (4) | | (1) | | (4) | 3 layers 7.4x10⁷ |
| | volume resistance [Ω] of single layer | 4.6×10⁷ | | 1.9×10⁸ | | 4.6×10⁷ | |
| | surface resistance [Ω] of single layer | 1.8×10⁶ | | - | | 1.8×10⁶ | |
| | average thickness [mm] | 0.15 | | 0.15 | | 0.12 | |
| No. 3 | blend | (3) | | (5) | | (3) | 3 layers 5.8×10⁶ |
| | volume resistance [Ω] of single layer | 1.4×10⁶ | | 4.5×10¹⁰ | | 1.4×10⁶ | |
| | surface resistance [Ω] of single layer | 6.4×10⁶ | | - | | 6.4×10⁶ | |
| | average thickness [mm] | 0.15 | | 0.35 | | 0.12 | |
| No. 4 | blend | (8) | | (2) | | (3) | 3 layers 7.6×10⁶ |
| | volume resistance [Ω] of single laver | 2.7×10⁴ | | 1.1×10¹² | | 1.4×10⁶ | |
| | surface resistance [Ω] of single laver | 1.8×10⁴ | | - | | 6.4×10⁶ | |
| | average thickness [mm] | 0.8 | | 0.41 | | 0.08 | |
| No. 5 | blend | (7) | | (1) | (1) | (3) | 4 layers 1.4×10⁷ |
| | volume resistance [Ω] of single laver | 1.0×10⁶ | | 1.9×10⁸ | 1.9×10⁸ | 1.4×10⁶ | |
| | surface resistance [Ω] of single layer | 4.3×10⁵ | | - | | 6.4×10⁶ | |
| | average thickness [mm] | 0.75 | | 0.6 | 0.15 | 0.08 | |
| No. 6 | blend | (7) | (3) | (1) | | (3) | 4 layers 4.4×10⁶ |
| | volume resistance [Ω] of single layer | 1.0×10⁶ | 1.4×10⁶ | 1.9×10⁸ | | 1.4×10⁶ | |
| | surface resistance [Ω] of single layer | 4.3×10⁵ | 6.4×10⁶ | - | | 6.4×10⁶ | |
| | average thickness [mm] | 0.75 | 0.6 | 0.15 | | 0.08 | |
| No. 7 | blend | (3) | | (1) | (1) | - | 3 layers 3.4×10⁸ |
| | volume resistance [Ω] of single layer | 1.4×10⁶ | | 1.9×10⁸ | 1.9×10⁸ | - | |
| | surface resistance [Ω] of single laver | 6.4×10⁶ | | - | | - | |
| | average thickness [mm] | 0.15 | | 0.15 | 0.12 | - | |
| No. 8 | blend | (7) | | (1) | (1) | - | 3 layers 1.7×10⁹ |
| | volume resistance [Ω] of single layer | 1.0×10⁶ | | 1.9×10⁸ | 1.9×10⁸ | - | |
| | surface resistance [Ω] of single layer | 4.3×10⁵ | | - | | - | |
| | average thickness [mm] | 0.75 | | 0.6 | 0.08 | - | |
| No. 9 | blend | (5) | | (1) | | (3) | 3 layers 1.5×10¹¹ |
| | volume resistance [Ω] of single layer | 5.5×10¹⁰ | | 1.9×10⁸ | | 1.4×10⁶ | |
| | surface resistance [Ω] of single layer | 4.5×10¹⁰ | | - | | 6.4×10⁶ | |
| | average thickness [mm] | 1.05 | | 0.6 | | 0.08 | |

In Table 1, "-" for a surface resistance means that the surface resistance was not measured, and "-" for others means that a corresponding region was not present.

The results in Table 1 show that the overall volume resistance can be reduced by setting each of the volume resistance of the first surface region and the volume resistance of the second surface region to smaller than the volume resistance of the intermediate region.

### INDUSTRIAL APPLICABILITY

As described above, the laminate and the glove of the present disclosure can eliminate electrification while enabling a reduction in the amount of an electrically conductive material used.

### Explanation of the Reference Symbols

- 1: Laminate
- 10: First surface region
- 20: Second surface region
- 30: Intermediate region
- 31: First intermediate layer
- 32: Second intermediate layer

## Claims

1. A laminate comprising a plurality of layers,
wherein
the plurality of layers are divided into:
a first surface region comprising one surface of the laminate;
a second surface region comprising another surface of the laminate; and
an intermediate region sandwiched between the first surface region and the second surface region, and
a volume resistance of the first surface region and a volume resistance of the second surface region are each smaller than a volume resistance of the intermediate region.

2. The laminate according to claim 1, wherein the intermediate region comprises a plurality of layers that are parallel to the first surface region and the second surface region.

3. The laminate according to claim 1 or 2, wherein a main component of each of the first surface region and the intermediate region is a thermosetting elastomer.

4. The laminate according to claim 3, wherein the first surface region and the second surface region each comprise an electrically conductive material.

5. The laminate according to claim 3, wherein the second surface region comprises a fiber layer, and the fiber layer comprises fiber having electrical conductivity.

6. The laminate according to claim 1, having a volume resistance of less than 10⁸ Ω.

7. The laminate according to claim 1 or 6,
wherein
the volume resistance of the intermediate region is no less than 10⁸ Ω, and
the volume resistance of each of the first surface region and the second surface region is less than 10⁷ Ω.

8. The laminate according to claim 1 or 6, wherein a surface resistance of each of the first surface region and the second surface region is less than 10⁷ Ω.

9. A glove comprising the laminate according to claim 1 or 2.
